# EUROPEAN PATENT APPLICATION

(11) **EP 4 660 369 A1**
(43) Date of publication of application: **10.12.2025**
(21) Application number: 24750511.8
(22) Date of filing: 29.01.2024
(51) Int. Cl.: D06M 23/16, D03D 15/242, D03D 15/283, C09D 5/18, C09D 7/40, C09J 7/30, C09J 7/40, B32B 7/12, B32B 7/06, B32B 37/26

(54) **NONCOMBUSTIBLE COMPOSITE FILM WITH SUPERB HEAT INSULATION PERFORMANCE, NONCOMBUSTIBLE COMPOSITE FILM SHEET USING SAME, AND METHOD FOR MANUFACTURING NONCOMBUSTIBLE COMPOSITE FILM SHEET**

(30) Priority: 02.02.2023 KR 20230013992
(71) Applicant: Dongbang Material Co., Ltd., Seoul 08595 (KR)
(72) Inventor: PARK, Insoon, Gwangmyeong-si, Gyeonggi-do 14243 (KR)
(74) Representative: Cabinet Chaillot
(86) International application number: PCT/KR2024/001314
(87) International publication number: WO 2024/162710

(57) **Abstract**

The present invention relates generally to a non-combustible composite film having excellent insulation performance, a non-combustible composite film sheet using the same, and a method of manufacturing the non-combustible composite film sheet, and more particularly to a non- combustible composite film having excellent insulation performance in which an insulation material layer is provided on the top of a non-combustible base layer to prevent the spread of fire by forming a foam layer in case of fire and an adhesive layer and a release paper layer are provided on the bottom of the non-combustible base layer to facilitate attachment to a surface, and also to provide a non-combustible composite film sheet using the same and a method of manufacturing the non-combustible composite film sheet.

## Description

### CROSS-REFERENCE TO RELATED APPLICATION

This application claims the benefit of Korean Patent Application No. 10-2023-0013992 filed on February 2, 2023, which is hereby incorporated by reference herein in its entirety.

### BACKGROUND

### 1. Technical Field

The present invention generally relates to a non-combustible composite film having excellent insulation performance, a non-combustible composite film sheet using the same, and a method of manufacturing the non-combustible composite film sheet, and more particularly, to a non- combustible composite film having excellent insulation performance in which an insulation material layer is provided on the top of a non-combustible base layer to prevent the spread of fire by forming a foam layer in case of fire and an adhesive layer and a release paper layer are provided on the bottom of the non-combustible base layer to facilitate attachment to a support surface, and also to provide a non- combustible composite film sheet using the same and a method of manufacturing the non-combustible composite film sheet.

### 2. Description of the Related Art

In general, non-combustible sheets configured to prevent fires from spreading through walls and to prevent toxic gases from being generated are provided in places where there is a risk of fire and places where electrical facilities are concentrated.

A non-combustible sheet can be obtained by bonding glass fiber fabric or aluminum foil with a non-combustible coating layer on both sides of a foamable resin using a flame retardant adhesive and then pressing it.

As a related art for such non-combustible sheets, a non-combustible insulation sheet and an apparatus and method for manufacturing the same were proposed in Korean Patent No. 10-1171711 (published on July 27, 2012). The proposed non-combustible sheet requires a separate adhesive for the application thereof. Accordingly, there is a problem in that workability is lowered due to difficult application because a tool or work is required to apply the adhesive. Furthermore, in case of fire, the adhesive that is used to adhere non-combustible sheets burns, so that the non-combustible sheets fall from a support surface.

Meanwhile, there is a problem in that it is difficult to extinguish a fire when the fire occurs in rechargeable battery cells, battery modules, battery packs, or the like in electric vehicles, energy storage systems (ESS), motorcycles, electric bicycles, drones, ships, trains, aviation, etc. using secondary batteries (lithium ion batteries, or the like).

Furthermore, there is a problem in that secondary human and material damage and loss occur due to the failure to confine flame within a predetermined space or prevent flame from spreading.

### [Related Art Literature]

Patent Document: Korean Patent No. 10-1171711 published on July 27, 2012.

### SUMMARY

The present invention has been conceived to overcome the above-described problems, and an object of the present invention is to provide a non-combustible composite film having excellent insulation performance that can defend against fire or prevent the spread of fire, and also to provide a non-combustible composite film sheet using the same and a method of manufacturing the non-combustible composite film sheet.

Furthermore, an object of the present invention is to provide a non-combustible composite film having excellent insulation performance that can prevent the chain explosions of secondary batteries and block the external emission of flame, heat, and debris through the control of the impact of flame, heat, and debris from explosion in case of fire in rechargeable battery cells, battery modules, battery packs, or the like in electric vehicles, energy storage devices, motorcycles, electric bicycles, drones, ships, trains, aviation, etc. using secondary batteries, and also to provide a non-combustible composite film sheet using the same and a method of manufacturing the non-combustible composite film sheet.

Furthermore, an object of the present invention is to provide a non-combustible composite film having excellent insulation performance that can confine flame within a predetermined space or prevent flame from spreading and can also implement the self-extinguishment of fire by reducing a fire space due to foaming, thereby preventing or delaying secondary human and material damage and loss, and also to provide a non-combustible composite film sheet using the same and a method of manufacturing the non-combustible composite film sheet.

Furthermore, an object of the present invention is to provide a non-combustible composite film having excellent insulation performance that can be applied to the field of preventing the spread of fire in the solar power and fire-vulnerable device industries in the solar power generation industry, and also to provide a non-combustible composite film sheet using the same and a method of manufacturing the non-combustible composite film sheet.

Moreover, an object of the present invention is to provide a non-combustible composite film having excellent insulation performance that can be applied to prevent the spread of fire in various construction and building fields in the construction and building industry, and also to provide a non-combustible composite film sheet using the same and a method of manufacturing the non-combustible composite film sheet.

In order to accomplish the above objects, the present invention provides a non-combustible composite film having excellent insulation performance, the non-combustible composite film including: a non-combustible base layer including any one of mica sheet and fabric, glass fiber, aramid fabric, silica fabric, basalt fabric, carbon fiber, pre-coated metal (PCM), and sheet molding compound (SMC) in order to withstand high-temperature flames generated within a short period of time in case of fire, to maintain tensile strength to prevent the spread of debris attributable to flame and explosion, and to support an insulation material layer; and the insulation material layer provided on a top of the non-combustible base layer, and including 5 to 30 weight of at least one resin selected from the group consisting of acrylic, polyurethane, nylon including PA6 and PA66, PBT, polycarbonate (PC), PBT, PET, PVC, silicone, and epoxy resins, natural rubber, and synthetic rubber; 20 to 50 parts by weight of at least one of phosphorus, nitrogen, inorganic, and halogen flame retardants; 10 to 40 parts by weight of at least one of organic and inorganic foaming agents; 0 to 3 parts by weight of at least one of inorganic and organic pigments; 1 to 5 parts by weight of at least one additive selected from the group consisting of a dispersant, a thickener, an anti-foaming agent, a curing agent, and a leveling agent; and ethanol or MEK, which is an oil-based solvent, as a diluent, in order to form a foam layer when it comes into direct contact with flame and heat and reaches a temperature of 170 degrees or higher.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a perspective view showing a non-combustible composite film having excellent insulation performance according to the present invention;
FIG. 2 is a longitudinal sectional view showing the non-combustible composite film having excellent insulation performance according to the present invention;
FIG. 3 is a perspective view showing a non-combustible composite film sheet having excellent insulation performance according to the present invention;
FIG. 4 is a longitudinal sectional view showing the non-combustible composite film sheet having excellent insulation performance according to the present invention; and
FIG. 5 is a flowchart showing a method of manufacturing the non-combustible composite film sheet having excellent insulation performance according to the present invention.

### DETAILED DESCRIPTION

The present invention may be modified in various manners and have various embodiments. Specific embodiments will be illustrated in the drawings and described in detail below.

However, this is not intended to limit the present invention to the specific embodiments, and it should be understood that the present invention includes all modifications, equivalents, and substitutes included in the technical spirit and scope of the present invention.

These embodiments are provided to describe the present invention in more detail to those having ordinary skill in the art to which the present invention pertains. Accordingly, the shape of each component shown in the drawing may be exaggerated to emphasize a clearer illustration.

In the following description of the present invention, when it is determined that a detailed description of each related known technology may obscure the gist of the present invention, the detailed description will be omitted.

The terms used herein are only used to describe specific embodiments and are not intended to limit the present invention. Singular expressions include plural expressions unless the context clearly dictates otherwise.

In the present specification, it should be understood that the terms such as "include" or "have" are intended to indicate the presence of features, numbers, steps, operations, components, parts, or combinations thereof described in the specification, but this does not preclude the presence or addition of one or more other features, numbers, steps, operations, components, parts, or combinations thereof.

First, the present invention relates to a non-combustible composite film having excellent insulation performance, and may be configured to include at least one of a non-combustible base layer 100 and an insulation material layer 200.

Preferred embodiments of the present invention will be described in more detail below with reference to the accompanying drawings.

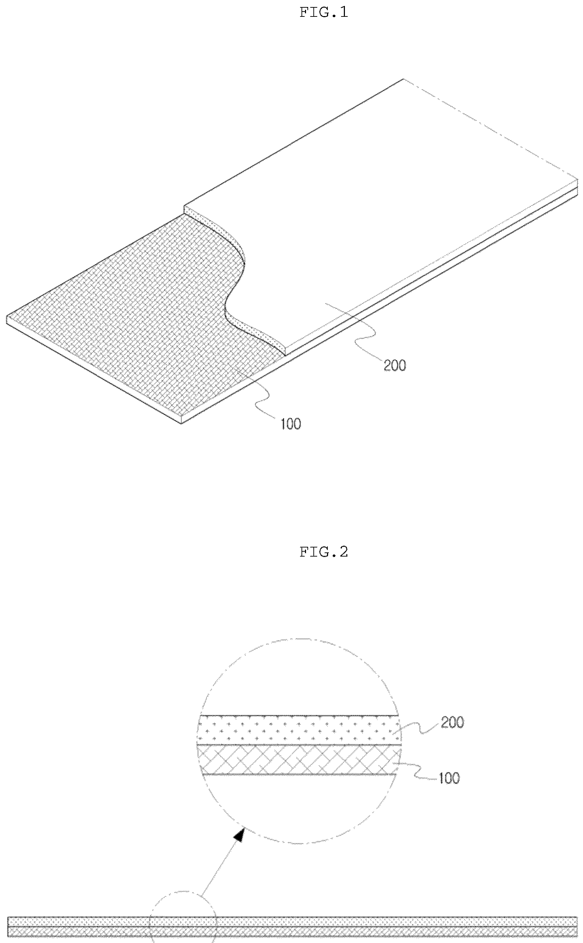

Referring to FIGS. 1 and 2:
FIG. 1 is a perspective view showing a non-combustible composite film having excellent insulation performance according to the present invention; and FIG. 2 is a longitudinal sectional view showing the non-combustible composite film having excellent insulation performance according to the present invention.

The non-combustible composite film having excellent insulation performance according to the present invention is provided such that the insulation material layer 200 is supported by the non-combustible base layer 100.

In this case, the non-combustible base layer100 is provided to withstand high-temperature flames generated within a short period of time in case of fire, to maintain tensile strength to prevent the spread of debris attributable to flame and explosion, and to support the insulation material layer 200. The non-combustible base layer provision step S100 is provided as any one of mica sheet and fiber, glass fiber, silica fiber, basalt fiber, carbon fiber, aramid fiber, polyphenylene sulfide (PPS) fiber, cerakwool, polypropylene (PP), polyester, nylon, kenaf, mineral wool, and wool. It is preferable that the non-combustible base layer 100 be provided as non-woven fabric, felt, and woven fabric.

Furthermore, it is more preferable that the non-combustible base layer 100 be provided as one or more mixtures.

The insulation material layer 200 is provided on the top of the non-combustible base layer 100. The insulation material layer 200 is provided such that a foam layer is formed when it comes into direct contact with flame and heat and reaches a temperature of 170 degrees or higher, so that in case of fire, it is possible to confine flame to a predetermined space or prevent it from spreading.

**Table 1**

| Water-based Insulation Material Layer | | | |
|---|---|---|---|
| Ingredients | Available Materials | Content Range (based on solid content) | |
| | | ardened Type | Dry Type |
| Resin | at least one of acrylic, polyurethane, nylon, PBT, PC (polycarbonate), PET, PVC, silicone, epoxy, natural rubber, synthetic rubber, EVA, and melamine | 3 to 20% | 5 to 30% |
| Flame Retardant | at least one of phosphorus-based, nitrogen-based, inorganic-based, and halogen-based flame retardants | 20 to 45% | 20 to 45% |
| Foaming Agent | at least one of organic foaming agent and inorganic foaming agent | 15 to 40% | 15 to 40% |
| Pigment | not used, or at least one of inorganic and organic pigments | 0 to 3% | 0 to 3% |
| Additive | plasticizer (when hardened type is produced) | 3 to 20% | |
| | dispersant, thickener, anti-foaming agent, hardener, and leveling agent | 1 to 5% | 1 to 5% |
| Total | | 100% | 100% |
| Diluent | water (H₂O) | | |

As shown in Table 1, the insulation material layer 200 is a water-based insulation material layer, and is provided to include, based upon 100 parts by weight of the total composition: 5 to 30 weight of at least one resin selected from the group consisting of acrylic, polyurethane, nylon, PBT, PC (polycarbonate), PET, PVC, silicone, epoxy, natural rubber, synthetic rubber, EVA, and melamine; 20 to 50 parts by weight of at least one of phosphorus, nitrogen, inorganic, and halogen flame retardants; 10 to 40 parts by weight of at least one of organic and inorganic foaming agents; 0 to 3 parts by weight of at least one of inorganic and organic pigments; 1 to 5 parts by weight of at least one additive selected from the group consisting of a dispersant, a thickener, an anti-foaming agent, a curing agent, and a leveling agent; and water (H₂O) as a diluent.

In this case, it is more preferable that the insulation material layer 200 include: 5 to 30 parts by weight of at least one resin selected from the group consisting of acrylic, polyurethane, nylon, PBT, PC (polycarbonate), PET, PVC, silicone, epoxy, natural rubber, synthetic rubber, EVA, and melamine; 20 to 45 parts by weight of at least one of phosphorus, nitrogen, inorganic, and halogen flame retardants; 15 to 40 parts by weight of at least one of organic and inorganic foaming agents; 0 to 3 parts by weight of at least one of inorganic and organic pigments; 1 to 5 parts by weight of at least one additive selected from the group consisting of a dispersant, a thickener, an anti-foaming agent, a curing agent, and a leveling agent; and water (H₂O) as a diluent.

Meanwhile, in the present invention, although the insulation material layer 200 is provided as a water-based insulation material layer in the present embodiment, it may be provided as an oil- and ethanol-based insulation material layer, other than the above type, as shown in Table 2.

**Table 2**

| Oil- or Ethanol-based Insulation Material Layer | | | |
|---|---|---|---|
| Ingredients | Available Materials | Content Range (based on solid content) | |
| | | ardened Type | Dry Type |
| Resin | at least one of acrylic, polyurethane, nylon, PBT, PC (polycarbonate), PET, PVC, silicone, epoxy, natural rubber, synthetic rubber, EVA, and melamine | 3 to 20% | 5 to 30% |
| Flame Retardant | at least one of phosphorus-based, nitrogen-based, inorganic-based, and halogen-based flame retardants | 20 to 45% | 20 to 45% |
| Foaming Agent | at least one of organic foaming agent and inorganic foaming agent | 15 to 40% | 15 to 40% |
| Pigment Additive | not used, or at least one of inorganic and organic pigments | 0 to 3% | 0 to 3% |
| | plasticizer (when hardened type is produced) | 3 to 20% | |
| | dispersant, thickener, anti-foaming agent, hardener, and leveling agent | 1 to 5% | 1 to 5% |
| Total | | 100% | 100% |
| Diluent | ethanol, MEK, or another oil-based solvent | | |

As shown in Table 2, the insulation material layer 200 is an oil-based insulation material layer, and is provided to include, based upon 100 parts by weight of the total composition: 5 to 30 weight of at least one resin selected from the group consisting of acrylic, polyurethane, nylon, PBT, PC (polycarbonate), PET, PVC, silicone, epoxy, natural rubber, synthetic rubber, EVA, and melamine; 20 to 50 parts by weight of at least one of phosphorus, nitrogen, inorganic, and halogen flame retardants; 10 to 40 parts by weight of at least one of organic and inorganic foaming agents; 0 to 3 parts by weight of at least one of inorganic and organic pigments; 1 to 5 parts by weight of at least one additive selected from the group consisting of a dispersant, a thickener, an anti-foaming agent, a curing agent, and a leveling agent; and ethanol, MEK, or another oil-based solvent as a diluent.

In this case, it is more preferable that the insulation material layer 200 include: 5 to 30 parts by weight of at least one resin selected from the group consisting of acrylic, polyurethane, nylon, PBT, PC (polycarbonate), PET, PVC, silicone, epoxy, natural rubber, synthetic rubber, EVA, and melamine; 20 to 45 parts by weight of at least one of phosphorus, nitrogen, inorganic, and halogen flame retardants; 15 to 40 parts by weight of at least one of organic and inorganic foaming agents; 0 to 3 parts by weight of at least one of inorganic and organic pigments; 1 to 5 parts by weight of at least one additive selected from the group consisting of a dispersant, a thickener, an anti-foaming agent, a curing agent, and a leveling agent; and ethanol, MEK, or another oil-based solvent as a diluent.

The insulation material layer 200 is a layer that is located on the surface of a laminated section and comes into direct contact with flame and heat when a fire occurs. Normally, the insulation material layer 200 maintains a thin surface layer, and foams itself to form a foam layer when flame and heat are generated and the temperature reaches about 170 degrees or higher. Depending on the degree of foaming, the foam layer determines the insulation rate. As the foaming rate increases, the insulation rate becomes lower, which prevents the movement of heat. To this end, the insulation material layer 200 may be provided as one or more of various resins, flame retardants, and foaming agents depending on the part used and/or the purpose of use.

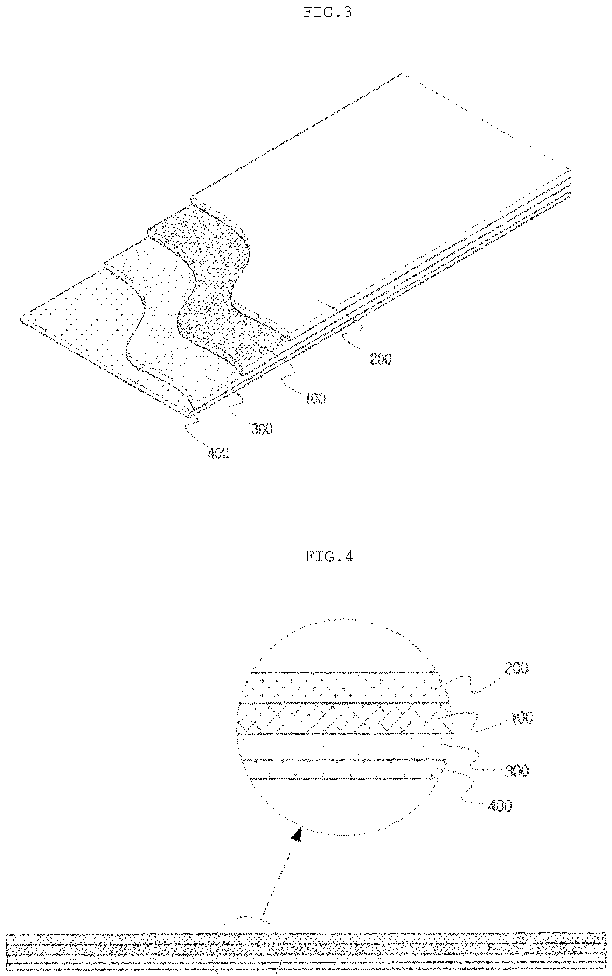

Referring to FIGS. 3 and 4:
FIG. 3 is a perspective view showing a non-combustible composite film sheet having excellent insulation performance according to the present invention; and FIG. 4 is a longitudinal sectional view showing the non-combustible composite film sheet having excellent insulation performance according to the present invention.

As shown in FIGS. 3 and 4, the non-combustible composite film sheet according to the present invention is provided to include: a non-combustible base layer 100; an insulation material layer 200 provided on the top of the non-combustible base layer 100 and configured to come into direct contact with frame and smoke and to form a foam layer; an adhesive layer 300 provided on the bottom of the non-combustible base layer 100 and viscously treated to enable attachment to PCM and SMC; and a release paper layer 400 covered with the adhesive layer 300.

The adhesive layer 300 is preferably provided as any one of flame retardant and non-flammable adhesive layers. The release paper layer 400 is preferably provided in any one of paper and film forms.

It is desirable that the performance of the adhesive layer 300 be improved through viscosity or adhesion depending on the purpose of use of the insulation and non-combustible composite film sheet. Depending on the application area, the adhesive layer 300 may be improved to a flame retardant or non-flammable layer. It is desirable to improve the physical properties of the adhesive layer 300 depending on the material and the strength of viscosity or adhesion.

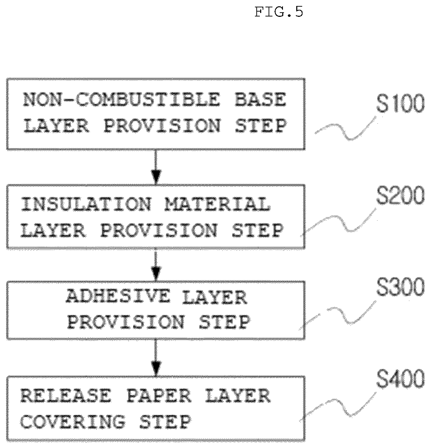

Referring to FIG. 5:
FIG. 5 is a flowchart showing a method of manufacturing the non-combustible composite film sheethaving excellent insulation performance according to the present invention.

The non-combustible composite film sheet having excellent insulation performance according to the present invention is manufactured through a non-combustible base layer provision step S100 in which the non-combustible base layer 100 is obtained in a film form by using a non-combustible material so that the insulation material layer 200 can be supported thereon and an insulating material layer provision step S200 in which the insulating material layer 200 having a predetermined thickness is provided on the top of the non-combustible base layer 100.

The non-combustible base layer provision step S100 is provided as any one of mica sheet and fiber, glass fiber, silica fiber, basalt fiber, carbon fiber, aramid fiber, polyphenylene sulfide (PPS) fiber, cerakwool, polypropylene (PP), polyester, nylon, kenaf, mineral wool, and wool. It is preferable that the non-combustible base layer 100 be provided as non-woven fabric, felt, and woven fabric.

Furthermore, it is more preferable that the non-combustible base layer 100 be provided as one or more mixtures.

In the insulation material layer provision step S200, the insulation material layer 200 is provided as a water- or oil-based insulation material layer. It is desirable that the insulation material layer 200 be provided using any one coating type of a spray type, a paint type, a comma method, a heat curing method, and a reaction curing method depending on the type of production and application.

In this case, in the spray type, the raw materials shown in Tables 1 and 2 are diluted to a viscosity range of 100 to 400 mPa.s, are sprayed on a desired area using a spray device, and are dried with the drying time adjusted according to the thickness of the coating layer, so that the insulation material layer 200 can be formed. In this case, the spray type is mainly useful when coating is performed for a curved area or a thin film having a thickness of about 100 µm or less.

In the above paint type, the raw materials shown in Tables 1 and 2 are diluted to a viscosity in the range of 300 to 1,500 mPa.s and then applied to a desired area using a brush, a roller, a spatula, or the like, the drying time is adjusted according to the thickness of the coating layer, and then drying is performed, so that the insulation material layer 200 can be formed. The paint type is mainly used when coating work is performed for a curved area or a thickness of about 50µm or more.

The coating type may use a gravure method or a comma method depending on the thickness of the coating film. In general, the gravure method may be used when a coating layer having a thickness of 100 µm or less is formed, and the comma method may be used when a coating layer having a thickness of 50 µm or more is formed. In particular, when the gravure method is used, the raw materials shown in Tables 1 and 2 above are adjusted to a viscosity range of 100-400 mPa.s. In contrast, when the comma method is used, the viscosity is diluted to 800 mPa.s or more, is coated, and is then dried, so that the insulation material layer 200 can be formed.

The coating layer may be formed by drying a solvent on a suitable coating layer through a drying device or by using a heat curing method that performs hardening when heat having a temperature of 100 degrees or higher is applied. The coating film may be formed by a curing method through a chemical reaction by using a two-component coating solution. When the coating film needs to be thick, a coating sheet may be produced through an extrusion process and be combined with a non-combustible material and then used.

In the extrusion method, when the coating layer of the insulation material layer 200 needs to be thicker than a predetermined thickness, the raw materials shown in Tables 1 and 2 are adjusted to a viscosity of 800 mPa.s or more, and a coating sheet is produced through an extrusion process and is combined with a non-combustible material and then used.

Through this, it is more desirable that the spray type is provided to have a viscosity of 100 to 400 mPa.s, the paint type is provided to have a viscosity of 300 to 1,500 mPa.s, and the coating types of the comma method, the heat curing method, and the reaction curing method are provided to have a viscosity of 800 mPa.s or more.

Next, in an adhesive layer provision step S300, the adhesive layer 300 having a predetermined thickness and viscously treated to enable attachment to PCM and SMC is provided on the bottom of the non-combustible base layer 100. The non-combustible composite film sheet is finally manufactured through a release paper layer covering step S400 in which the surface of the adhesive layer 300 is covered with a release paper layer 400 that protects the adhesive layer.

Therefore, the present invention has the advantage of preventing a non-combustible sheet from falling when a fire occurs.

Furthermore, the present invention has the advantage of allowing a fire to be extinguished immediately when the fire occurs in rechargeable battery cells, battery modules, battery packs, or the like.

Moreover, the present invention has the advantage of preventing secondary human and material damage and loss from occurring by confining flame within a predetermined space or preventing it from spreading when a fire occurs.

While the present invention has been described based on what is shown in the drawings above, this is merely an example. Various substitutions, modifications, and changes may be possible without departing from the technical spirit of the present invention, so that the present invention is not limited to the above-described embodiments and drawings.

## Claims

1. - A non-combustible composite film having excellent insulation performance, the non-combustible composite film comprising:
a non-combustible base layer including any one of mica sheet and fiber, glass fiber, silica fiber, basalt fiber, carbon fiber, aramid fiber, polyphenylene sulfide (PPS) fiber, cerakwool, polypropylene (PP), polyester, nylon, kenaf, mineral wool, and wool in order to withstand high-temperature flames generated within a short period of time in case of fire, to maintain tensile strength to prevent spread of debris attributable to flame and explosion, and to support an insulation material layer; and
the insulation material layer provided on a top of the non-combustible base layer, and including 5 to 30 weight of at least one resin selected from the group consisting of acrylic, polyurethane, nylon including PA6 and PA66, PBT, polycarbonate (PC), PET, PVC, silicone, and epoxy resins, natural rubber, and synthetic rubber; 20 to 50 parts by weight of at least one of phosphorus, nitrogen, inorganic, and halogen flame retardants;
10 to 40 parts by weight of at least one of organic and inorganic foaming agents;
0 to 3 parts by weight of at least one of inorganic and organic pigments;
1 to 5 parts by weight of at least one additive selected from the group consisting of a dispersant, a thickener, an anti-foaming agent, a curing agent, and a leveling agent;
and ethanol or MEK, which is an oil-based solvent, as a diluent, in order to form a foam layer when it comes into direct contact with flame and heat and reaches a temperature of 170 degrees or higher.

2. - A non-combustible composite film sheet having excellent insulation performance, the non-combustible composite film sheet comprising:
a non-combustible base layer including any one of mica sheet and fiber, glass fiber, silica fiber, basalt fiber, carbon fiber, aramid fiber, polyphenylene sulfide (PPS) fiber, cerakwool, polypropylene (PP), polyester, nylon, kenaf, mineral wool, and wool in order to withstand high-temperature flames generated within a short period of time in case of fire, to maintain tensile strength to prevent spread of debris attributable to flame and explosion, and to support an insulation material layer;
the insulation material layer provided on a top of the non-combustible base layer, and including 5 to 30 weight of at least one resin selected from the group consisting of acrylic, polyurethane, nylon, PBT, PC (polycarbonate), PET, PVC, silicone, epoxy, natural rubber, synthetic rubber, EVA, and melamine;
20 to 50 parts by weight of at least one of phosphorus, nitrogen, inorganic, and halogen flame retardants;
10 to 40 parts by weight of at least one of organic and inorganic foaming agents;
0 to 3 parts by weight of at least one of inorganic and organic pigments;
1 to 5 parts by weight of at least one additive selected from the group consisting of a dispersant, a thickener, an anti-foaming agent, a curing agent, and a leveling agent; and ethanol or MEK, which is an oil-based solvent, as a diluent, in order to form a foam layer when it comes into direct contact with flame and heat and reaches a temperature of 170 degrees or higher;
an adhesive layer provided on a bottom of the non-combustible base layer, and viscously treated to enable attachment to PCM and SMC; and
a release paper layer provided on a bottom of the adhesive layer.

3. - The non-combustible composite film sheet of claim 2, wherein the adhesive layer is provided as any one of flame retardant and non-flammable adhesive layers.

4. - The non-combustible composite film sheet of claim 2, wherein the release paper layer is provided in any one of paper and film forms.

5. - A method of manufacturing a non-combustible composite film sheet having excellent insulation performance, the method comprising:
a non-combustible base layer provision step in which a non-combustible base layer, including any one of mica sheet and fiber, glass fiber, silica fiber, basalt fiber, carbon fiber, aramid fiber, polyphenylene sulfide (PPS) fiber, cerakwool, polypropylene (PP), polyester, nylon, kenaf, mineral wool, and wool, is obtained in a film form by using a non-combustible material so that an insulation material layer can be supported thereon;
an insulating material layer provision step in which the insulating material layer, having a predetermined thickness and including 5 to 30 weight of at least one resin selected from the group consisting of acrylic, polyurethane, nylon, PBT, PC (polycarbonate), PET, PVC, silicone, epoxy, natural rubber, synthetic rubber, EVA, and melamine, 20 to 50 parts by weight of at least one of phosphorus, nitrogen, inorganic, and halogen flame retardants, 10 to 40 parts by weight of at least one of organic and inorganic foaming agents, 0 to 3 parts by weight of at least one of inorganic and organic pigments, 1 to 5 parts by weight of at least one additive selected from the group consisting of a dispersant, a thickener, an anti-foaming agent, a curing agent, and a leveling agent, and ethanol or MEK, which is an oil-based solvent, as a diluent in order to come into direct contact with flame and heat and form a foam layer, is provided on a top of the non-combustible base layer;
an adhesive layer provision step in which an adhesive layer having a predetermined thickness and viscously treated to enable attachment to PCM and SMC is provided on a bottom of the non-combustible base layer; and
a release paper layer covering step in which a surface of the adhesive layer is covered with a release paper layer that protects the adhesive layer.

6. - The method of claim5, wherein in the insulation material layer provision step, the insulation material layer be provided using any one coating type of a spray type, a paint type, a comma method, a heat curing method, and a reaction curing method depending on a shape of the insulation material layer.

7. - The method of claim 6, wherein in the insulation material layer provision step, the spray type is provided to have a viscosity of 100 to 400 mPa.s, the paint type is provided to have a viscosity of 300 to 1,500 mPa.s, and coating types of the comma method, the heat curing method, and the reaction curing method are provided to have a viscosity of 800 mPa.s or more.
